# EUROPÄISCHE PATENTSCHRIFT

(11) **EP 0 501 142 B1**
(45) Veröffentlichungstag und Bekanntmachung des Hinweises auf die Patenterteilung: **20.03.1996**
(21) Anmeldenummer: 92101115.1
(22) Anmeldetag: 24.01.1992
(51) Int. Cl.: C01G 25/02

(54) **Verfahren zur Herstellung eines monoklinen Zirkonoxids**
Process for production of monoclinic zirconium oxide
Procédé pour la production d'un oxyde de zirconium monoclinique

(30) Priorität: 01.03.1991 DE 4106535
(43) Veröffentlichungstag der Anmeldung: 02.09.1992
(73) Patentinhaber: Degussa Aktiengesellschaft, D-60311 Frankfurt (DE)
(72) Erfinder: Binder, Dieter, Dr., W-8755 Alzenau 2 (DE); Kleinschmit, Peter, Dr., W-6450 Hanau 9 (DE); Hoffmeister, Hans, Dr., W-6460 Gelnhausen (DE); Reuter, Roland, W-6100 Darmstadt (DE)

(56) Entgegenhaltungen:
- EP-A- 0 314 939
- DE-A- 1 927 935
- US-A- 3 811 907
- US-A- 4 829 028

## Beschreibung

Die Erfindung betrifft ein Verfahren zur Herstellung von dendritenförmigem monoklinen Zirkonoxid mit einem SiO₂-Gehalt unter 1,0 Gew.-% und einer mittleren Korngröße (d₅₀-Wert) im Bereich von 0,5 µm bis 3,0 µm und einer spezifischen Oberfläche (BET) im Bereich von 3 bis 15 m²/g, umfassend die thermische Spaltung von Zirkoniumsilikat und Auslaugung derselben.

Zirkonoxid (ZrO₂) findet in Form des natürlich vorkommenden Minerals Baddeleyit als auch in Form synthetisch hergestellter Produkte mit teilweise unterschiedlichen Stoffparametern Anwendung als Rohstoff in der keramischen Industrie, etwa zur Herstellung von Zirkonoxid-Keramik und von Farbkörpern auf der Basis von Zirkonsilikat.

Zirkonoxid mit einem Gehalt über 99 % wird aus Baddeleyit-haltigen Erzen durch Mahlung, Flotation und chemische Behandlung (Säurewäsche) gewonnen. Die Qualität unterliegt naturgemäß Schwankungen und der d₅₀-Wert (50 % Wert der Rückstandssummenkurve) liegt im allgemeinen oberhalb 15 µm, was die Reaktivität bei Festkörperreaktionen einschränkt und die Verwendbarkeit bei der Farbkörperherstellung erschwert. Durch Mahlen kann zwar der d₅₀-Wert erniedrigt werden, gleichzeitg führt aber der Abrieb aus dem Mahlaggregat, wie z. B. Al₂O₃ und MgO, zu neuen Problemen.

Durch thermischen Aufschluß von Zirkonsand (ZrSiO₄) mit Soda mit nachfolgender hydrolytischer Behandlung des entstandenen Natriumzirkonsilikats und ggf. Kalzinierung und Vermahlung lassen sich Zirkonoxide gewinnen, deren d₅₀-Wert (gemessen mittels Laserbeugung) im Bereich zwischen 2 und 5 µm liegen kann und deren BET-Oberfläche zwischen 3 und 15 m²/g beträgt. Morphologisch handelt es sich bei diesen Produkten im wesentlichen um kugelförmige Teilchen und Agglomerate.

Nachteilig an diesen Produkten ist ihre für Strukturkeramik-Einsatzzwecke meist ungenügende Eignung sowie insbesondere ihr hoher Preis, was ihrem Einsatz bei der Farbkörperherstellung sehr enge Grenzen setzt.

Zirkonoxid läßt sich auch durch thermische Spaltung von Zirkonsilikat (ZrSiO₄) mit nachfolgender Abtrennung der Kieselsäure gewinnen. Die thermische Spaltung von Zirkonsilikat erfolgt bei Temperaturen oberhalb etwa 1700 °C - W.C. Butterman et al, Amer. Mineralogist 52 (1967), 884. Bei etwa 1760 °C beginnt sich ZrSiO₄ in tetragonales festes ZrO₂ und flüssiges SiO₂ zu zersetzen. Oberhalb etwa 2400 °C bilden ZrO₂ und SiO₂ eine einheitliche Flüssigkeit, welche durch schnelles Abkühlen erstarrt - bei dem so erhältlichen thermisch gespaltenen Zirkonsilikat handelt es sich um eine amorphe Kieselsäurephase, in welche Zirkonoxidkristalle eingebettet sind, welche durch Flotations- und/oder Laugungsverfahren von der SiO₂-Phase abgetrennt werden können. Zur thermischen Spaltung von ZrSiO₄ sind Plasma- und Lichtbogenverfahren bekannt.

Aus der EP-A 0 314 939 sind Zirkonoxidpulver bekannt, welche eine BET-Oberfläche von kleiner 30 m²/g und eine Primärteilchengröße von 0,1 bis 0,5 µm aufweisen. Die Zirkonoxidpulver werden durch ein Fällungsverfahren aus einer Zirkonsalzlösung, die ggf. Yttrium- oder/und Magnesiumionen enthält, erzeugt.

Die US 3,811,907 lehrt durch ein Plasmaverfahren hergestelltes thermisch gespaltenes Zirkoniumsilikat, wobei 95 % der darin enthaltenen Zirkonoxidkristallite einen maximalen Durchmesser von 0,5 µm, vorzugsweise 0,2 µm, aufweisen. Die monoklinen Zirkonoxidkristallite, welche sich durch Auslaugung des thermisch gespaltenen Zirkoniumsilikats mit Natriumhydroxid gewinnen lassen, weisen im allgemeinen eine einheitliche Form und einen Siliciumdioxidgehalt unter 1 Gew.-% auf.

Gemäß dem in der DE-OS 19 27 935 beschriebenen Verfahren wird zur Herstellung von Zirkonoxid Zirkonsand im Lichtbogen geschmolzen; das nach dem Erstarren der Schmelze und Zerkleinern erhaltene thermisch gespaltene Zirkoniumsilikat weist gut ausgebildete Zirkonoxidkristallite auf, die gelegentlich dendritisch verwachsen sein können.

Bei den Plasmaverfahren - vgl. z. B. GB-PS 1 248 595 und Ceramics, Febr. 1974, Seite 30 - läßt man einen Vorhang aus feinst aufgemahlenem Zirkonsand durch die Flamme des Plasmabrenners rieseln, wobei das Zirkonsilikat thermisch gespalten und dann gekühlt wird. Eine vollständige Spaltung des ZrSiO₄ erfordert die Verwendung von feinstgemahlenem Zirkonmehl; eine Mahlung des Zirkonsandes ist energieintensiv und zudem werden Fremdbestandteile aus dem Mahlaggregat eingeschleppt. Die im Plasmaverfahren erhältlichen Produkte enthalten ZrO₂-Kristalle mit einem Durchmesser von 0,1 bis 0,2 µm und einer Länge von vielen µm (vgl. GB-PS 1 447 276), weisen jedoch eine andere Morphologie auf als die erfindungsgemäßen Produkte.

Gemäß einem anderen Verfahren wird Zirkonsilikat im Lichtbogen geschmolzen und als Block erstarren lassen, der Schmelzkörper anschließend gebrochen und gemahlen - vgl. Gmelin's Handbuch der anorg. Chemie, Zirkonium, Band 42 (1958), Seite 56. Das so hergestellte thermisch gespaltene Zirkonsilikat enthält Zirkonoxid mit einer mittleren Korngröße (d₅₀-Wert) um 15 bis 20 µm und einer BET-Oberfläche um 0,5 m²/g.

Alternativ kann auch die Schmelze aus einem Lichtbogen-Schmelzofen entnommen und durch Abkühlen an Luft in ein kugelförmiges Produkt überführt werden - vgl. DE-PS 26 35 030. Die Anmelderin der vorliegenden Erfindung stellte fest, daß die Kornverteilung des Zirkonoxids im so hergestellten thermisch gespaltenen Zirkonsilikat zu einem mittleren Korndurchmesser - d₅₀-Wert, bestimmt mittels Laserbeugung - von über 3 µm und zu einer spezifischen Oberfläche nach BET um 2 m²/g führt. Die Stoffdatenermittlung erfolgte hier, wie in den anderen Fällen, an Zirkonoxid, das durch Auslaugung des thermisch gespaltenen Zirkonsilikats mit konzentrierter Natronlauge bis zu einem SiO₂-Restgehalt von unter 0,5 Gew.-% erhalten wurde.

Die Verwendbarkeit der aus den thermisch gespaltenen Zirkonsilikaten herstellbaren Zirkonoxide zur Herstellung keramischer Farbkörper ist wegen ihrer teilweise recht niedrigen spezifischen Oberfläche und/oder ihres hohen d₅₀-Wertes und zudem breiten Kornspektrum eingeschränkt. So bleiben bei gegebener Farbkörperrezeptur bezüglich der Farbintensität und/oder des Farbtons Wünsche offen.

Aufgabe der Erfindung ist somit, ein Verfahren zur Herstellung von monoklinem Zirkonoxid auf der Basis der thermischen Spaltung von Zirkoniumsilikat und Auslaugung desselben zur Verfügung zu stellen, das zu einem dendritenförmigen Zirkonoxid mit einer mittleren Korngröße (d₅₀-Wert) im Bereich von 0,5 bis 3,0 µm und einer spezifischen Oberfläche (BET) im Bereich von 3 bis 15 m²/g führt, das sich zur Herstellung von keramischen Farbkörpern auf der Basis von Zirkonsilikat-Einschlußpigmenten und Wirtsgitterpigmenten besser eignet.

Gefunden wurde ein Verfahren zur Herstellung von monoklinem Zirkonoxid mit einem SiO₂-Gehalt unter 1,0 Gew.-% in Form dendritenförmiger Teilchen mit einer mittleren Korngröße (d₅₀-Wert) im Bereich von 0,5 µm bis 3,0 µm und einer spezifischen Oberfläche (BET) im Bereich von 3 bis 15 m²/g durch Auslaugen der amorphen Kieselsäure aus thermisch gespaltenem Zirkonsilikat mit Alkalilauge bei 100 bis 200 °C und einem Molverhältnis von SiO₂ zu Alkalihydroxid von 1 zu mindestens 2 und Abtrennen des hierbei erhaltenen Zirkonoxids von der wäßrigen Alkalisilikatlösung, das dadurch gekennzeichnet ist, daß man ein thermisch gespaltenes Zirkonsilikat verwendet, das hergestellt wurde durch Schmelzen von Zirkonsilikat in einem Hochfrequenz- oder Mittelfrequenz-Induktionsschmelzofen mit Sinterkrustentiegel bei einer Temperatur im Bereich von 2500 bis 3000 °C, Abschrecken der Schmelze, indem diese in Form eines Strahls abgezogen und in freiem Fall durch Anblasen mit einem inerten kühlen Gas und/oder durch Besprühen mit Wasser aufgefächert und dabei abgeschreckt wird, und, soweit erwünscht, Zerkleinern durch Brechen und/oder Mahlen.

Erfindungsgemäß hergestelltes Zirkonoxid zeichnet sich vorzugsweise durch ein enges Kornspektrum aus, wobei mindestens 90 % des Zirkonoxids aus Teilchen mit einem Durchmesser von kleiner 10 µm, bevorzugt kleiner 5 µm, und größer 0,2 µm besteht.

Die Kornverteilung (darunter der d₅₀-Wert) wurde durch Laserbeugung mit Wasser als Suspensionsflüssigkeit, Na-Pyrophosphat als Dispersionsmittel und 5 Minuten Ultraschall-Mischung im Granulometer HR 850 der Firma Cilas-Alcatel ermittelt. Die BET-Oberfläche wurde gemäß DIN 66131 mit Stickstoff als Adsorptionsgas bestimmt.

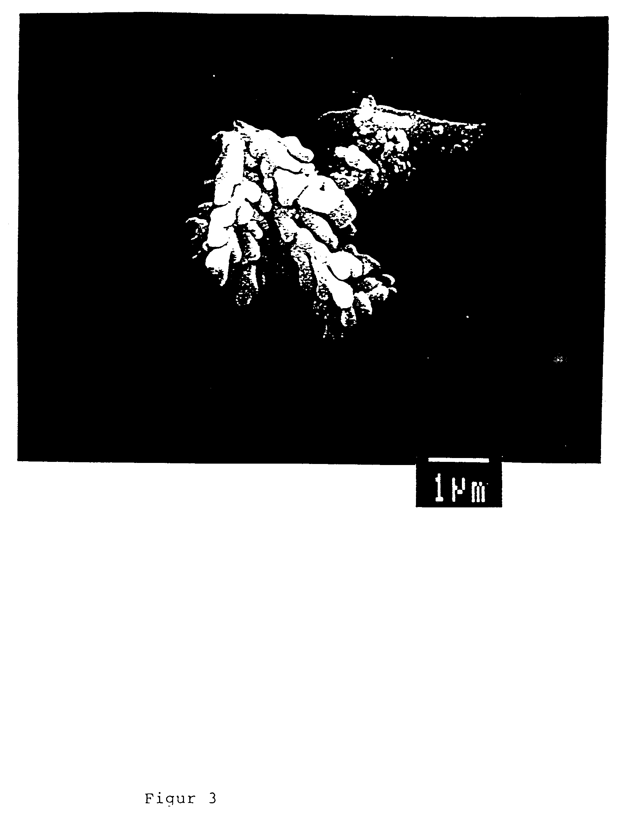

Das erfindungsgemäß hergestellte Zirkonoxid weist, wie aus der rasterelektronenmikroskopischen Aufnahme der Figur 3 hervorgeht, eine als dendritenförmig bezeichnete Morphologie auf.

Die erfindungsgemäß hergestellten Zirkonoxide unterscheiden sich in ihren Stoffdaten von vorbekannten Produkten. Sie weisen in ihrer Anwendung als Rohstoff für Zirkonsilikat-Farbkörper Vorteile auf, welche nicht vorhersehbar waren. Offensichtlich sind die spezifische Morphologie, der d₅₀-Wert und die BET-Oberfläche ursächlich für diese Vorteile - Steigerung der Farbintensität und/oder Farbtonverschiebung in die gewünschte Richtung.

Unter Zirkonsilikat-Farbkörpern vom Wirtsgittertyp werden insbesondere solche verstanden, in welchen Zr⁴⁺-Positionen im Gitter valent kompensiert durch farbgebende Ionen wie insbesondere Vanadium-(Blau), Praseodym-(Gelb) oder Terbiumionen (Gelb) eingenommen werden (vgl. US-PS 2,441,447, GB-PS 1 447 276, Prospekt der Firma Th. Goldschmidt 2/83, Nr. 59). Unter den Farbkörpern vom Einschlußtyp sind solche zu verstehen, in welchen die farbtragende Komponente, wie z. B. Cadmiumsulfoselenide, Eisenoxide, Eisentitanate, kolloidale Metalle, Eisen-Manganverbindungen als diskrete Phase in einer Hülle aus Zirkonsilikat eingeschlossen sind - vgl. DE-PS 23 12 535, DE-PS 23 23 770, DE-PS 21 43 525, DE-OS 39 06 818, EP-A 0 294 664.

Die erfindungsgemäß hergestellten Zirkonoxide lassen sich auch zur Herstellung strukturkeramischer Werkstoffe verwenden, weil sie ausreichend rein sind und das hierfür erforderliche Kornspektrum aufweisen.

Zur Herstellung des als Ausgangsprodukt dienenden thermisch gespaltenen Zirkonsilikats wird zweckmäßigerweise ein dünner, insbesondere 5-20 mm breiter Schmelzstrahl über eine Rinne aus dem Tiegel abgezogen und mittels einer oder mehreren Düsen mit Druckluft angeblasen. Im allgemeinen wird das verwendete Gas etwa Raumtemperatur haben, höhere oder niedrigere Temperaturen sind aber möglich. Alternativ wird, ebenfalls im freien Fall, die Schmelze mit Wasser aus einer oder mehreren Düsen besprüht. Gemäß einer besonders bevorzugten Ausführungsform wird der Schmelzstrahl zunächst mit Luft angeblasen und anschließend, weiterhin im freien Fall, mit Wasser, vorzugsweise aus zwei oder mehreren, ggf. verstellbaren, übereinander angeordneten Düsen, besprüht. Zum Abschrecken der abgezogenen Schmelze sind im allgemeinen 0,1 bis 3 m³ Luft, bezogen auf 0 °C und 1013,25 kPa (=Nm³ = Normkubikmeter), pro kg Schmelze ausreichend. Für das Abschrecken durch Besprühen mit Wasser hat sich eine Wassermenge im Bereich von 10 bis 100 l pro kg Schmelze als geeignet erwiesen. Das nun erstarrte Produkt kann, soweit erforderlich, in einem Wasserbecken oder einer Wasserrinne weiter gekühlt werden. Das Produkt fällt in Form von Granalien mit einer Länge von etwa 1 mm bis 10 mm an und kann direkt oder nach Brechen und/oder Mahlen der Laugung zugeführt werden.

Die Art des Abschreckens ist für die Stoffdaten des thermisch gespaltenen Zirkonsilikats und des darin enthaltenen Zirkonoxids entscheidend. Ein langsames Abkühlen der Schmelze führt zu größeren ZrO₂-Kristallen, welche die vorstehend beschriebenen Nachteile bei der Farbkörperherstellung mit sich bringen. Durch einfaches Eingießen der Schmelze in Wasser erhält man Produkte mit einem sehr breiten -für die Farbkörperbildung nachteiligen - Kornspektrum, das außerhalb des beanspruchten Bereichs liegt.

Selbstverständlich kann auch eine in einem Lichtbogenofen erzeugte Schmelze von thermisch gespaltenem Zirkonsilikat in der zuvor dargestellten Weise abgeschreckt werden, um ein für die Laugung geeignetes Ausgangsmaterial zu erhalten. Besonders vorteilhaft gestaltet sich aber die Erzeugung der Schmelze in einem Induktionsschmelzofen wie er aus der EP-B 0 119 877 bekannt wurde.

In dem genannten Dokument wird Zirkonsilikat beispielhaft als zu schmelzendes Material genannt, es fehlen aber Hinweise auf die thermische Spaltung und die Art und Weise, wie Schmelze gleichförmig entnommen und abgeschreckt werden soll. Gemäß einer Ausführungsform der EP-B 0 119 877 weist der Ofen ein seitlich durch die Spule tretendes, ggf. gekühltes Rohr auf, das der Abnahme der Schmelze dienen soll; die Schmelze wird in ein Wasserbecken auslaufen lassen. Im Falle einer Schmelze thermisch gespaltenen Zirkonsilikats kommt es beim Abkühlen zu einer Volumenzunahme, so daß das Abflußrohr verstopft: Ein Öffnen des Auflaufrohrs mittels Meißel- und Bohrwerkzeugen erwies sich wegen der Härte und Sprödigkeit der erstarrten Schmelze als unbefriedigend.

Für das Gelingen des Verfahrens ist wesentlich, daß ein gleichförmiger Strahl Schmelze aus dem Ofen abgenommen und der Abschreckvorrichtung zugeführt werden kann. Dies gelingt, wenn das Verfahren in einem Induktionsschmelzofen, dessen Wand als Schmelzspule ausgebildet ist und einen Sinterkrustentiegel umhüllt, teilkontinuierlich ausgeführt wird. Hierbei wird in periodischen Abständen ein Teil der Schmelze, vorzugsweise 5 bis 30 % des Tiegelinhalts, abgenommen und die entsprechende Menge Zirkonsilikat dem Tiegel zugeführt. Als Auslaufvorrichtung wird eine am oberen Rand der Induktionsspule angeordnete offene Auslaufrinne verwendet, welche intensiv gekühlt wird. In periodischen Abständen wird der Auslauf der Schmelze durch Schmelzanstich mittels einer Anstichvorrichtung gestartet und die Auslaufmenge nach Bedarf durch Kippen des Ofens mittels einer Kippvorrichtung reguliert. Die Anstichvorrichtung umfaßt eine Anstichlanze und automatisch regelbare Vorrichtungen zur Veränderung des Neigungswinkels oder zur vertikalen Parallelverschiebung der horizontal oder geneigt angeordneten Anstichlanze und zum Vortreiben derselben. Die Anstichlanze wird so geführt, daß sie zunächst die Schmelznase des aus dem vorangegangenen Schmelzanstich in der Auslaufrinne verbliebenen Rests an erstarrter Schmelze von unten erfaßt und anhebt und anschließend zwischen der angehobenen erstarrten Schmelze und dem Boden der Rinne bis zum Durchstich durch die Sinterkruste vorangetrieben werden kann.

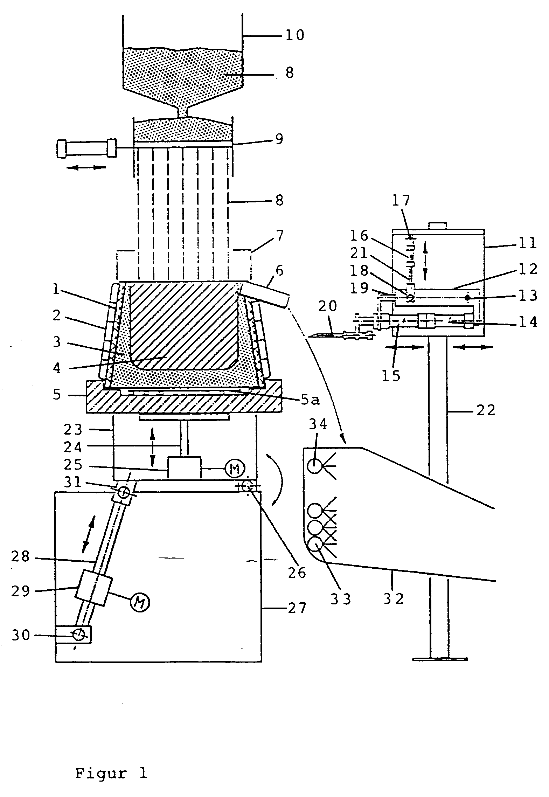

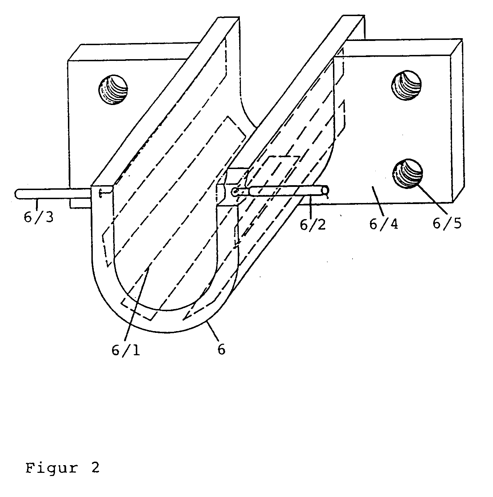

Figur 1 zeigt eine für das erfindungsgemäße Verfahren geeignete Induktionsschmelzanlage mit Vorrichtungen zum Befüllen des Ofens, zum Schmelzanstich und zum Abkühlen der Schmelze. Die Kondensatoren des Schwingkreises, der Frequenzgenerator und weiteren erforderlichen elektrischen Einrichtungen sind nicht gezeigt. Die Resonanzfrequenz des Schwingkreises kann im Hochfrequenzbereich (größer 10 kHz) mittels Röhrengeneratoren, im Mittelfrequenzbereich (um/kleiner 10 kHz) mittels Thyristor-gesteuerter Generatoren vom Invertertyp erzeugt werden. Figur 2 zeigt eine vorteilhafte Auslaufrinne für die Schmelze.

In Figur 1 bedeuten 1 eine Schmelzspule, welche von einer Kühlvorrichtung 2 umgeben ist und den die Schmelze 4 aufnehmenden gebildeten Sinterkrustentiegel 3 aus dem zu schmelzenden Material umhüllt. Die Schmelzspule ruht auf einer Gußform 5, welche auch den gekühlten und von der Spule isolierten Spulenboden 5a aufnimmt. Die offene Auslaufrinne 6 ist so im Bereich des oberen Randes der Spule fixiert (mittels einer in Fig. 2 gezeigten Haltevorrichtung 6/4 und Bohrungen 6/5 für Befestigungselemente), daß der Rinnenboden vor dem Schmelzanstich unterhalb des Niveaus der Schmelze liegt und der obere Rand der Rinne im wesentlichen mit dem Rand der Schmelzspule abschließt.

Die Schmelzspule kann ein- oder mehrwindig sein; einwindige Spulen aus Kupfer oder Aluminium werden bevorzugt, weil hiermit Spulen mit größerem Spulendurchmesser eingesetzt werden können, was eine Voraussetzung für Anwendungen des Ofens im Betriebsmaßstab ist. Um das Entfernen des Schmelzregulus nach Beendigung des Schmelzens mit periodischen Schmelzanstichen und Abkühlen zu erleichtern, ist es zweckmäßig, einen Spulenkörper in leicht konischer Form (gemäß Fig. 1) einzusetzen, weil sich das Schmelzgut während des Abkühlens durch Modifikationsumwandlungen ausdehnt.

Die Beschickung des Schmelztiegels erfolgt aus dem Vorratsbehälter 10, aus welchem das zu schmelzende Material einer Vorrichtung 9 zum flächigen Dosieren des Materials 8 zugeführt wird. Zur Minimierung von Wärmeverlusten können Wärmeschutzschilde 7 um den oberen Rand des Ofens angeordnet sein; zusätzlich ist es zweckmäßig, die Tiegeloberfläche mit dem zu schmelzenden Material bedeckt zu halten.

Mittels einer Vorrichtung 23 zum Heben und Senken des Spulenbodens - beispielsweise umfaßt sie in Figur 1 einen Hubzylinder 24 und ein Antriebsaggregat 25 - läßt sich der erstarrte Regulus leicht aus der Spule entfernen. Mittels der Kippvorrichtung 27, welche in unterschiedlicher Form ausgebildet sein kann - in Figur 1 bedeuten 28 eine Hubstange, 29 ein Antriebsaggregat, 30 und 31 Angriffspunkte der Hubvorrichtung und 26 den Drehpunkt des Ofens - läßt sich die Ausflußmenge der Schmelze durch Kippen des Ofens regulieren.

Die Vorrichtung 32 dient der Weiterbehandlung der periodisch über die Rinne 6 auslaufenden Schmelze. Mit 34 ist eine Druckluftdüse, mit 33 eine Sprühdüse für Wasser (hier 3 Düsen übereinander) bezeichnet; das erstarrte Material wird in der als Wanne ausgebildeten Vorrichtung 32 den nicht gezeigten Trocknungs- und Brech- bzw. Mahleinrichtungen zugeführt.

Die in Figur 1 dargestellte Ausführungsform der Schmelzanstichvorrichtung umfaßt eine Hubvorrichtung, welche als ein am Befestigungspunkt 17 einer Halterung 11 fixierten pneumatischer Zylinder 16 ausgebildet ist; die Hubstange 21 greift den das Vortriebsgestänge 19 aufnehmenden Haltebügel 12, der am Befestigungspunkt 13 drehbar an der Halterung 11 befestigt ist, am Drehpunkt 18 an; durch Betätigen des Hubzylinders wird der Neigungswinkel der Anstichlanze 20 in vertikaler Richtung verändert und kann somit dem Neigungswinkel der Auslaufrinne 6 angepaßt werden. Eine Vorrichtung zum Vortreiben der Anstichlanze bzw. des sie tragenden Gestänges 19 wird von zwei pneumatischen Zylindern 14 und 15, welche am Haltebügel 12 befestigt sind und das Vortriebsgestänge aufnehmen, gebildet.

In Figur 2 ist eine bevorzugte Ausführungsform der nach oben offenen kühlbaren Rinne dargestellt. Der Mantel der Rinne enthält eine maximale Zahl Bohrungen 6/1 parallel zur Längsrichtung der Rinne (in Fig. 2 gestrichelt dargestellt), welche mäanderartig miteinander verbunden sind und von einem Kühlmedium, das durch Leitung 6/2 zu und durch Leitung 6/3 abgeführt wird, durchflossen werden. Die Halterung 6/4, welche mittels Befestigungselementen (6/5 stellt eine Bohrung hierfür dar) an der Schmelzspule fixiert wird, dient der Positionierung der Rinne. Eine möglichst intensive Kühlung der Rinne wird bevorzugt, weil unter dieser Voraussetzung im Schmelzbetrieb außer einer leicht entfernbaren Schmelznase keine Anbackungen auftreten.

Die Laugung des thermisch gespaltenen Zirkonsilikats erfolgt in an sich bekannter Weise unter Verwendung von Alkalilauge, insbesondere Natronlauge mit einem Gehalt im Bereich von 30 bis 50 Gew.-%. Die Laugung kann ein- oder mehrstufig mit isothermer oder isobarer Reaktionsführung erfolgen. Mit einer Stufe gelangt man zu Zirkonoxiden mit unter 1 Gew.-%, meist um 0,5 Gew.-% Rest-SiO₂, wenn ein 10 %iger Überschuß an Alkalilauge eingesetzt wird; Produkte mit niedrigerem SiO₂-Gehalt, d. h. unter 0,5 Gew.-%, insbesondere unter 0,2 Gew.-%, lassen sich gewinnen, wenn eine zweite Laugungsstufe unter Verwendung eines größeren Überschusses an Alkalihydroxid - bezogen auf das noch vorhandene SiO₂ - angeschlossen wird. Die Laugung wird im allgemeinen im Temperaturbereich zwischen 100 und 200 °C, insbesondere 115 bis 170 °C, durchgeführt. Unter Verwendung von beispielsweise 50 gew.-%iger Natronlauge sinkt die Temperatur bei der isobaren Laugung im offenen Reaktor von ca. 150 auf ca. 115 °C. Bei isothermer Reaktionsführung steigt der Druck während der Laugung an. Nach der Laugung wird das gewonnene Zirkonoxid mittels üblicher Trennvorrichtungen, etwa Filterpressen, von der Wasserglaslösung bzw. Waschlauge getrennt und getrocknet. Eine Mahlung des Produkts nach dem ersten oder dem zweiten Laugungsschritt in einer Kugelmühle kann vorteilhaft sein.

Das Verfahren läßt sich in einfacher Weise in technischem Maßstab durchführen. Hierbei bedarf es keiner aufwendigen Feinvermahlung des Zirkonsands vor der thermischen Spaltung. Das erfindungsgemäß erhältliche Zirkonoxid zeichnet sich durch eine hohe Reinheit aus, woraus in Verbindung mit den anspruchsgemäßen Stoffeigenschaften die besondere Eignung für die Herstellung von keramischen Farbkörpern und Strukturkeramik resultiert.

### Beispiele 1a und 1b

In der in Figur 1 dargestellten Anlage wurde Zirkonsilikat geschmolzen, periodisch ein Schmelzanstich durchgeführt und abgeschreckt mittels einer Druckluftdüse und zwei bzw. drei übereinander angeordneten Wassersprühdüsen. Geschmolzen wurde bei 2700 °C unter Verwendung einer einwindigen Schmelzspule - Durchmesser 40 cm, Höhe 25 cm; Arbeitsfrequenz 120 kHz; Durchmesser der Auslaufrinne (gemäß Fig. 2) 16 mm, Kühlwasserdurchfluß 400 l/h; Durchsatz an Zirkonsilikat 20 kg/h, 4 bis 5 Anstiche pro Stunde; pro Schmelzanstich wurden ca. 4 m³ Luft, bezogen auf 0 °C und 1013,25 kPa (=Nm³), und ca. 200 l (Beispiel 1b) bzw. ca. 300 l (Beispiel 1a) Wasser für die Abschreckung verwendet. Die Laugung des so erhaltenen thermisch gespaltenen Zirkonsilikats erfolgte mit 50 gew.-%iger Natronlauge bei einem Molverhältnis von SiO₂ zu NaOH von 1 zu 2,2. Beginnend bei 148 °C wurde isotherm gelaugt. Nach Dekantieren, Nachwaschen und Trocknen wurde Zirkonoxid mit einem SiO₂-Gehalt von 0,25 bzw. 0,3 Gew.-% erhalten. Die Stoffdaten folgen aus der Tabelle.

| | Beispiel 1a | Beispiel 1b |
|---|---|---|
| Art des Abschreckens | 1 Luftdüse und 3 Wasserdüsen | 1 Luftdüse und 2 Wasserdüsen |
| Kornverteilung * | | |
| d₁₀ (µm) | 2,92 | 7,35 |
| d₅₀ (µm) | 0,94 | 1,96 |
| d₉₀ (µm) | 0,37 | 0,44 |
| Spez. Oberfläche (BET) m²/g | 8,5 | 6,1 |
| SiO₂-Gehalt (Gew.-%) | 0,25 | 0,3 |

| | | |
|---|---|---|
| * Die d₁₀- bzw. d₉₀-Werte geben an, daß 10 bzw. 90 % des Materials Teilchendurchmesser oberhalb der angegebenen Werte aufweisen; der d₅₀-Wert ist der mittlere Teilchendurchmesser. | | |

### Beispiel 2 und Vergleichsbeispiel

### Herstellung eines Zirkon-Eisen-Farbkörpers

Analog Beispiel 2 der DE-PS 21 43 525 wurde ein Pulvergemisch hergestellt, geglüht, aufgearbeitet und in einem Glasurtest geprüft. Zum Einsatz kam im Beispiel 2 das Zirkonoxid gemäß Beispiel 1a, im Vergleichsbeispiel Zirkonoxid der Firma Hüls AG (Dynazirkon M®; hergestellt durch Laugung des thermisch gespaltenen Zirkonsilikats "DIN 100") mit einem d₅₀-Wert von 16,5 µm und einer BET-Oberfläche von 0,5 m²/g).

| | |
|---|---|
| ZrO₂: | 34 g |
| SiO₂: | 20 g |
| FeSO₄ · 7H₂O: | 24 g |
| NaF: | 12 g |
| NaCl: | 5 g |
| KNO₃: | 5 g |

- Mischung:: 2 h in Fliehkraft-Kugelmühle (Mahlbecher aus Hartporzellan 350 ml, Mahlkugeln aus Al₂O₃ ⌀ 30 mm 4 St.)
- Glühung:: In 100 ml-Schamotte-Tiegel, ausgeschmiert mit ZrSiO₄, abgedeckt mit Al₂O₃-Scherben, in 2 h auf 1050 °C erhitzen, 0,5 h Haltezeit
- Aufarbeitung:: Zerkleinern des rotbraunen Glühguts nach Zusatz von 30 ml Wasser in Kugelmühle (s.o.), waschen durch fünfmaliges Dekantieren mit je 1 l Wasser, trocknen bei 110 °C im Trockenschrank
- Glasurtest:: zirkongetrübte Glasur, Einfärbung 6 % Farbkörper in Glasurschlicker, der mit Glasurschlitten auf einen Steingutscherben aufgebracht wird.
- Glasurbrand:: Aufheizzeit 7 h auf 1100°C Haltezeit 45 min bei 1100°C
- Farbwerte:: CIE-Lab-Farbsystem (DIN 5033, 6164, 6174)

| | Beispiel 2 | Vergleichsbeispiel |
|---|---|---|
| L | 62,2 | 69,2 |
| a | 18,9 | 12,4 |
| b | 16,6 | 13,3 |

Das erfindungsgemäße Zirkonoxid führt zu einem intensiveren und röteren Farbkörper.

## Patentansprüche

1. Verfahren zur Herstellung Von monoklinem Zirkonoxid mit einem SiO₂-Gehalt unter 1,0 Gew.-% in Form dendritenförmiger Teilchen durch Schmelzen von Zirkonsilikat in einem Hochfrequenz- oder Mittelfrequenz-Induktionsschmelzofen mit Sinterkrustentiegel bei einer Temperatur im Bereich von 2500 bis 3000 °C oder durch Schmelzen in einem Lichtbogenofen, Abschrecken der Schmelze des thermisch gespaltenen Zirkonsilikats, Auslaugen der erstarrten, soweit erwünscht, durch Brechen und/oder Mahlen zerkleinerten Schmelze mit Alkalilauge bei 100 bis 200 °C und einem Molverhältnis von SiO₂ zu Alkalihydroxid von 1 zu mindestens 2 und Abtrennen des hierbei erhaltenen Zirkonoxids von der wäßrigen Alkalisilikatlösung,
dadurch gekennzeichnet,
daß man die Schmelze in Form eines Schmelzstrahls aus dem Ofen abzieht, den Schmelzstrahl in freiem Fall durch Anblasen mit einem inerten kühlen Gas und/oder durch Besprühen mit Wasser auffächert und damit abschreckt.

2. Verfahren nach Anspruch 1,
dadurch gekennzeichnet,
daß man den Schmelzstrahl zunächst mit Luft anbläst und anschließend, weiterhin in freiem Fall, mit Wasser, vorzugsweise aus zwei oder mehreren Düsen, besprüht.

## Claims

1. Process for the production of monoclinic zirconium oxide with an SiO₂ content of below 1.0 wt.% in the form of dendriform particles by melting zirconium silicate in a high frequency or medium frequency induction melting furnace with a sintered crust crucible at a temperature in the range from 2500 to 3000°C or by melting in an arc furnace, quenching the melt of the thermally decomposed zirconium silicate, leaching the solidified melt, which is, if desired, comminuted by crushing and/or grinding, with alkali metal hydroxide solution at 100 to 200°C and a molar ratio of SiO₂ to alkali metal hydroxide of 1 to at least 2 and separating the resultant zirconium oxide from the aqueous alkali metal silicate solution,
characterised in that
the melt is drawn off from the furnace as a molten jet, the molten jet is fanned out under free fall by being blown with an inert cool gas and/or by spraying with water and is thus quenched.

2. Process according to claim 1,
characterised in that
the molten jet is initially blown with air and then, still in free fall, sprayed with water, preferably from two or more jets.

## Revendications

1. Procédé d'obtention d'oxyde de zirconium monoclinique ayant une teneur en SiO₂ en dessous de 1 % en poids, sous forme de particules dendritiques, par fusion du silicate de zirconium dans un four de fusion par induction sous haute fréquence ou moyenne fréquence avec un creuset d'incrustation de frittage à une température dans la zone de 2500 à 3000°C ou par fusion dans un four à arc, refroidissement brusque de la masse fondue de silicate de zirconium dissocié thermiquement, lessivage de la masse fondue solidifiée, pour autant que cela soit désiré, broyée par broyage et/ou concassage, avec des lessives alcalines de 100 à 200°C et avec un rapport molaire de SiO₂ à l'hydroxyde de métal alcalin de 1 à au moins 2 et séparation de l'oxyde de zirconium obtenu de cette façon de la solution aqueuse de silicate de métal alcalin, caractérisé en ce qu'on soutire la masse fondue du four sous la forme d'un jet de matière fondue, en ce qu'on ventile le jet de matière fondue en chute libre par aspersion avec un gaz froid inerte et/ou par aspersion avec de l'eau et ainsi on refroidit brusquement.

2. Procédé selon la revendication 1, caractérisé en ce que l'on souffle le jet de matière fondue en premier lieu avec de l'air et ensuite, en outre en chute libre, on asperge avec de l'eau, de préférence à partir de deux buses ou davantage.
